Europäisches Patentamt

**European Patent Office**

**Office européen des brevets**

(19)

(11) Publication number: **0 097 414**

**A1**

(12) **EUROPEAN PATENT APPLICATION**

(21) Application number: **83301901.1**

(22) Date of filing: **05.04.83**

(51) Int. Cl.³: **H 01 B 7/08**
**H 01 B 13/00**

(30) Priority: **29.04.82 US 372895**

(43) Date of publication of application:
**04.01.84 Bulletin 84/1**

(84) Designated Contracting States:
**AT BE DE FR GB IT NL SE**

(71) Applicant: **AMP INCORPORATED**
**Eisenhower Boulevard**
**Harrisburg Pennsylvania(US)**

(72) Inventor: **Kees, Gerald Henry, Jr.**
**311 Salisburg Street**
**Kernersville North Carolina 27284(US)**

(72) Inventor: **Pegram, Warren Julius**
**P.O. Box 1081 407 Center Street**
**Kernersville North Carolina 27284(US)**

(74) Representative: **Gray, Robin Oliver et al,**
**BARON & WARREN 18 South End Kensington**
**London W8 5BU(GB)**

(54) Multiconductor flat cable, and method and apparatus for manufacturing it.

(57) Multi-conductor flat cable (2) comprises insulated wires (4) in side-by-side parallel coplanar relationship. The wires (4) are held in the cable by a flexible adhesive (6). The adhesive is provided between juxtaposed wires as spaced-apart beads. Portions of the wires between the beads may be free of adhesive. The cable (2) is produced by feeding the wires from reels (34) or other endless sources through an apparatus (36) which gathers the wires (4) to form the cable (2) and has an applicator (54) for applying the adhesive.

Fig. 6

EP 0 097 414 A1

TITLE MODIFIED
see front page

FLAT CONDUCTOR CABLE AND METHOD
AND APPARATUS FOR MANUFACTURING SAME

This invention relates to multi-conductor flat cables of the type commonly referred to as ribbon cable. A ribbon cable comprises a plurality of insulated wires in side-by-side parallel relationship with a securing or holding means which holds the wires in the cable as a part thereof.

Ribbon cable, as defined above, is available to the electrical industry from several manufacturers or suppliers and is used for several types of wiring and harness making operations. The cable is available from the suppliers with varying numbers of conductors and with conductors of varying sizes, although cable is usually supplied with all of the wires in the cable of only one size. The securing means which holds the wires in the cable is, in some cases, polymeric film between which the wires are laminated by rolling two sheets of film onto the wires as they are passed through laminating rolls. Ribbon cable is also produced by simply bonding the insulation of adjacent wires to each other and by the use of thread or polymeric strands which are woven into the cable.

Ribbon cable is commonly used when it is required that a given number of conductors extend from one location to another location. For example, where adjacent racks containing electronic equipment must be provided with a harness extending between the racks, connectors can be installed on the ends of a length of ribbon cable and the connectors can then be coupled to complementary connectors in the two racks of equipment.

It is not practical to use ribbon cable in its presently available forms for harnesses in many types of equipment because of the fact that ribbon cable does not satisfy widely varying requirements in the harness. For example, a typical harness for the lighting system of an automotive vehicle may comprise a multi-conductor cable extending from a junction box towards the front end of the vehicle. At various locations, branches of the harness will extend to the lights required at different locations on the vehicle; for example, branches may extend to the right-hand head light, to the parking lights, and to the right hazard light from the main body of the cable which would extend from the right-hand lights to the left-hand lights of the vehicle. Not all of the wire in the harness will necessarily be of the same size and heavier gage wires may be required for some circuits than are required for the remaining circuits. Furthermore, varying numbers of wires may be required in the harness depending upon the optional equipment to which conductors must extend and it is impractical for the harness manufacturer to maintain an inventory of ribbon cables which will satisfy all of his possible needs in manufacturing harnesses for different types of vehicles.

Another disadvantage or shortcoming of ribbon cable is that it must be used in definite lengths and if some of the wires in the harness are shorter than other wires, it would be necessary in using ribbon cable to cut out the unneeded wires and discard them. In view of the fact that ribbon cable is inherently more expensive than discrete wires, this added loss could not be tolerated.

Ribbon cable cannot, therefore, be used in manufacturing automotive harnesses, many aircraft harnesses, appliance harnesses, and harnesses for other types of equipment where the conditions are similar to those encountered in the manufacture of harnesses for motor vehicles. Notwithstanding the advantages which are obtained with the use of ribbon cable, manufacturers have continued to produce their harnesses with discrete wires and the harnesses must then be wrapped with tape or secured with bundle ties so that the cables in the harness will be retained in a reasonably compact bundle.

9717
0097414

The present invention is directed to the achievement of an improved form of ribbon cable which can be used in the manufacture of a wide variety of electrical harnesses which heretofor have been produced with discrete wires. The invention is further directed to the achievement of an apparatus and method of manufacturing harnesses.

The invention is directed to the achievement of a flat multi-conductor cable of the type comprising a plurality of discrete insulated wires in side-by-side parallel relationship and securing means holding the wires in the cable. A cable in accordance with the invention is particularly characterized in that the securing means comprises a flexible adhesive which is provided on the cable between juxtaposed wires at spaced-apart locations, the wires in the cable being free of adhesive in the zones which are between the spaced-apart locations. The adhesive is provided on one surface of the cable in the form of beads between juxtaposed wires in the cable with each bead extending from the one surface of the cable substantially to the region of closest proximity of the juxtaposed wires. The adhesive is bonded to the opposed surfaces of the juxtaposed wires and each bead fills a space between the opposed surfaces.

In accordance with a further embodiment, each bead is an extrusion of adhesive which was produced by depositing adhesive on the one surface of the cable and thereafter applying pressure to the adhesive causing it to flow to at least the region of closest proximity of the juxtaposed wires. In accordance with a further embodiment, the beads of adhesive are aligned between the side edges of the cable forming spaced apart rows of beads.

The invention is also directed to the method of making flat multi-conductor cable of the type comprising a plurality of conductors in side-by-side parallel coplanar relationship, insulating material surrounding each of the conductors, and insulating material extending between juxtaposed conductors. The method of the present invention is particularly characterized by the steps of feeding a plurality of discrete wires, each of which has a coaxially extruded sheet of thermoplastic insulating material in surrounding relationship thereto, along
converging feed paths which bring the wires into parallel
side-by-side relationship thereby forming the cable. The
cable is thereafter fed through an adhesive application zone
and beads of adhesive are intermittently deposited on one
surface of the cable and between juxtaposed wires. Thereafter, the side edges of the cable are confined between
confining means and pressure is applied to the beads thereby
causing the beads to be extruded into the space between the
juxtaposed wires. The invention is also directed to the
achievement of an apparatus for making multi-conductor cable
of the type comprising a plurality of conductors in side-by-
side parallel coplanar relationship, insulating material
surrounding each of the conductors and insulating material
extending between juxtaposed conductors. Apparatus in accordance with the invention is particularly characterized in
that it comprises wire feeding means for feeding a plurality
of discrete insulated wires simultaneously along a wire and
cable feed path which extends from a plurality of endless
sources of discrete wires through an adhesive application
zone thence through, and beyond, an adhesive extruding zone.
Guide means are provided on the path between the sources of
discrete wires and the adhesive application zone, the guide
means being effective to guide the discrete wires into side-
by-side coplanar parallel relationship, thereby forming a
multi-conductor cable. The adhesive application zone has an
applicator therein for applying adhesive to a first surface
of the cable between juxtaposed wires in the cable and the
adhesive extruding zone has therein cable confining means
engageable with the side edges of the cable being fed therepast and cable compressing means for compressing the cable.
The cable confining means confines the cable to a predetermined
width while the cable passes through the compressing means
whereby the adhesive applied to the cable is extruded into
the cable and between the opposed surfaces of juxtaposed
wires.

FIGURE 1 is a perspective view of a section of multi-
conductor ribbon cable in accordance with the invention.

FIGURES 2 and 3 are views taken along the lines 2-2 and 3-3 in Figure 1.

FIGURE 4 is a view similar to Figure 2 of an alternative embodiment of a cable in accordance with the invention.

FIGURE 5 is a perspective view of a section of cable having electrical connectors installed thereon.

FIGURES 6 and 7 are views similar to Figure 2 showing further alternative embodiments.

FIGURE 8 is a perspective view of an apparatus for producing cable in accordance with the invention.

FIGURE 9 is a view showing the underside of the wire gathering zone, the underside of the adhesive application zone and the underside of the extruding or pressing zone of the apparatus; this view being taken approximately along the section lines 9-9 of Figure 8.

FIGURE 10 is a view showing details of the adhesive applicator of the apparatus of Figure 8.

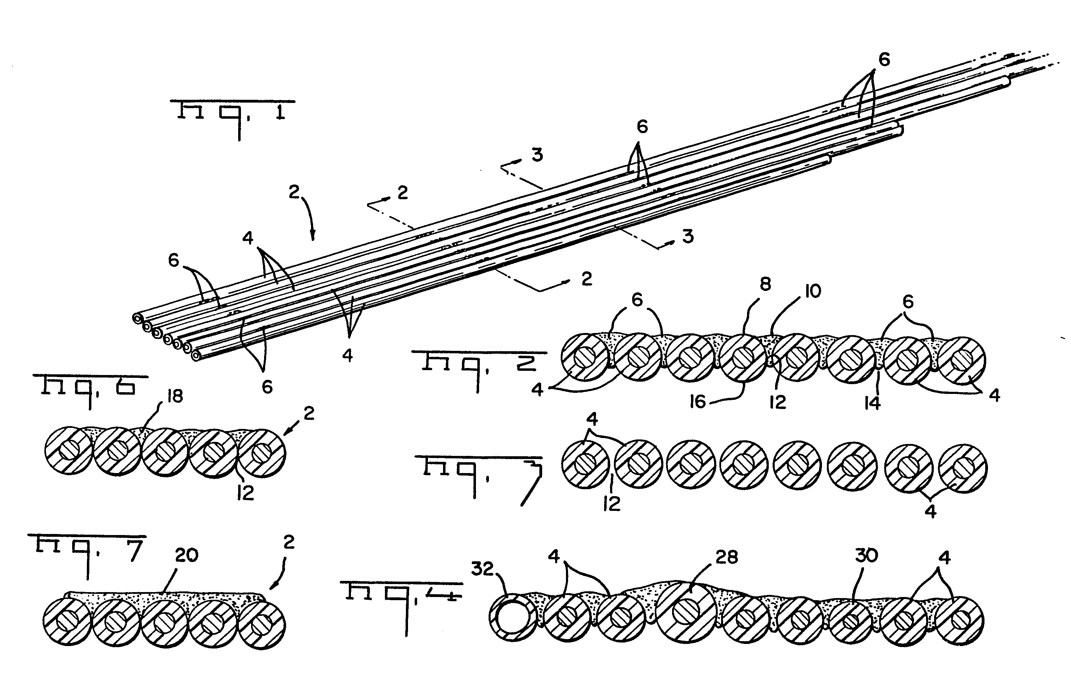

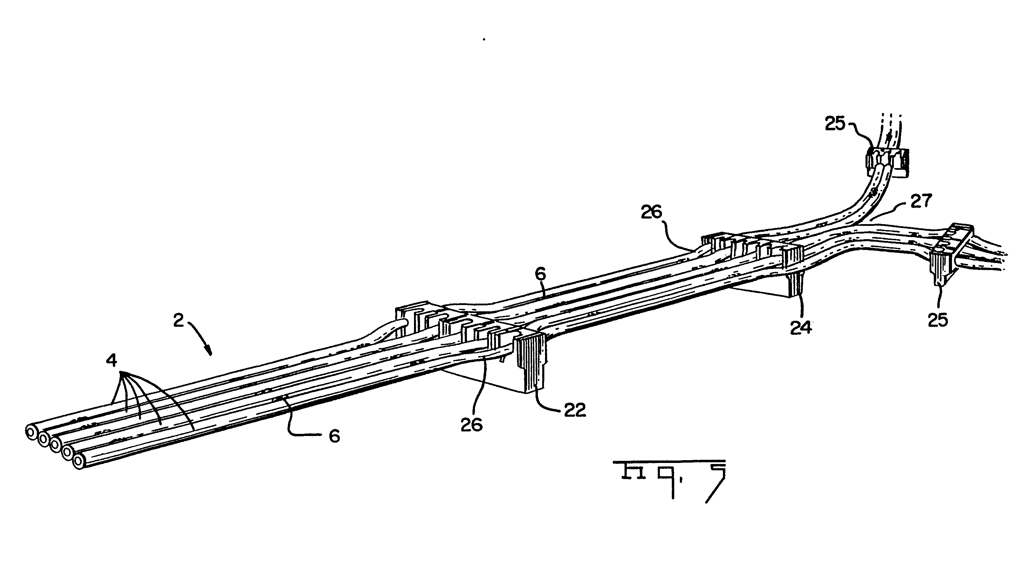

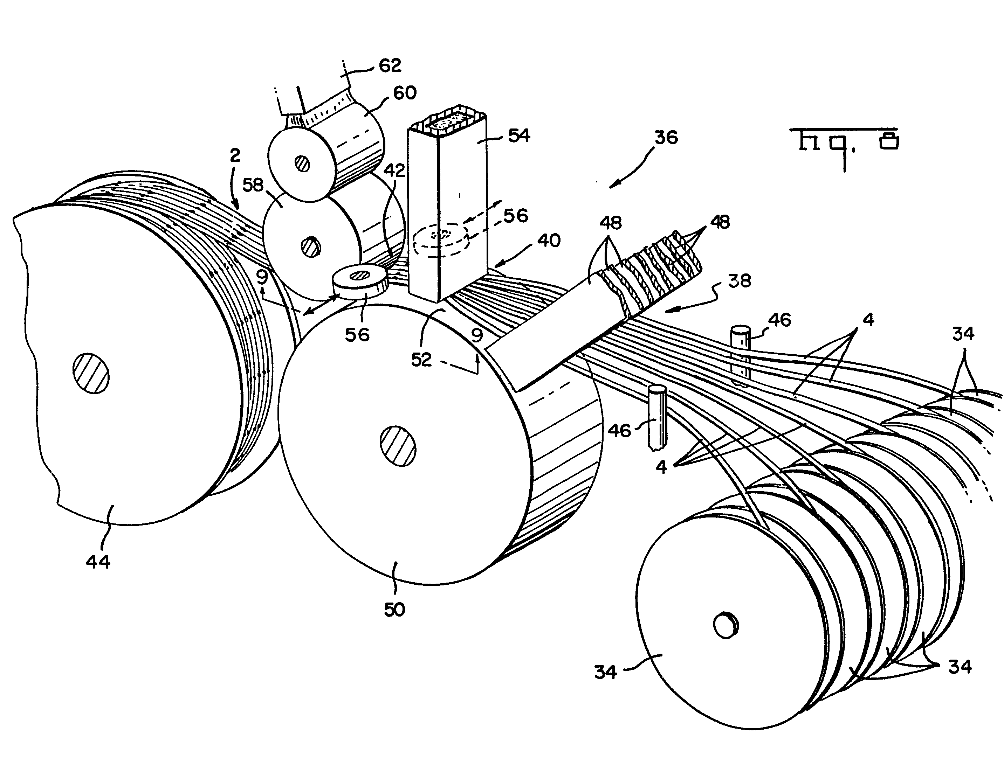

As shown in Figures 1-3, cable 2 in accordance with the invention comprises a plurality of insulated wires 4 in side-by-side parallel relationship with the wires secured to each other by beads 6 of an adhesive. The adhesive is preferably a thermoplastic hot melt adhesive, although other flexible adhesives might be used as discussed below. Each bead 6 has an upper flat surface 10 which forms a part of the upper surface 8 of the cable and which extends tangentially between the juxtaposed wires in the cable. The beads extend downwardly in Figure 2 past the regions of closest proximity 12 of the juxtaposed wires and may extend to, or substantially to, the lower surface 16 of the cable. In Figure 2, the lower surfaces of the beads 14 do not extend quite to the lower surface of the cable.

The individual beads 6 of adhesive may have a length along the cable 2 in the range of about 3 mm to 25 mm and may be spaced apart along the length of the cable by distances ranging from about 1 cm to 6 cm or more. In Figure 2, the juxtaposed wires in the cable are spaced from each other at the region of closest proximity 12 so that the beads have an hour-glass shaped cross section. The length of the beads and the distance between beads on the cable as noted above, are not critical and can be fixed at the time of manufacture of the cable to suit the precise service for which the cable is intended. The distance between juxtaposed wires should be in the range of about .01 to about .2 mm, and is not critical, although little is gained by exceeding a spacing of about .13 cm. This matter is also discussed below with relation to the method and apparatus for manufacturing the cable.

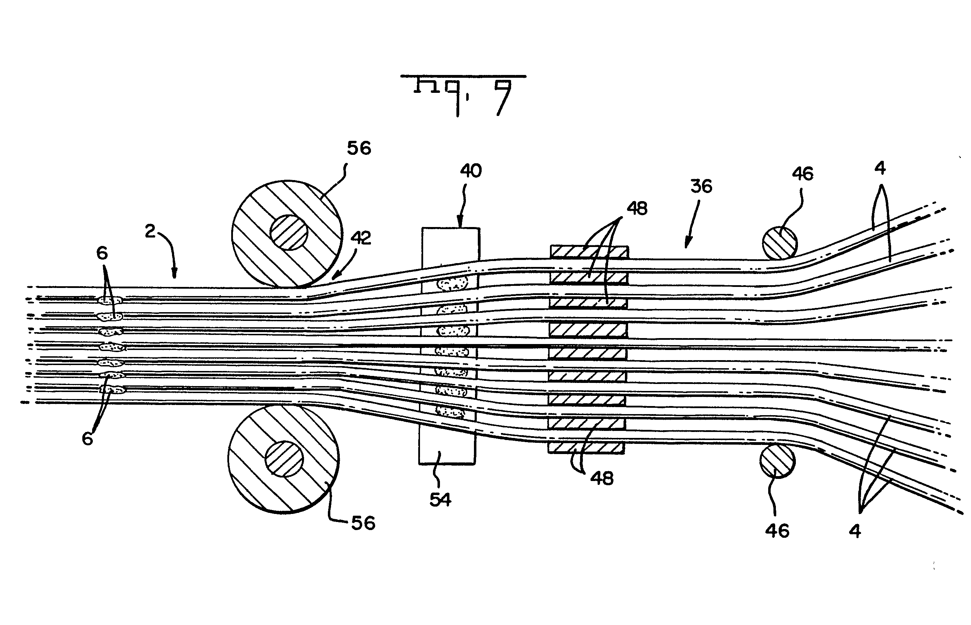

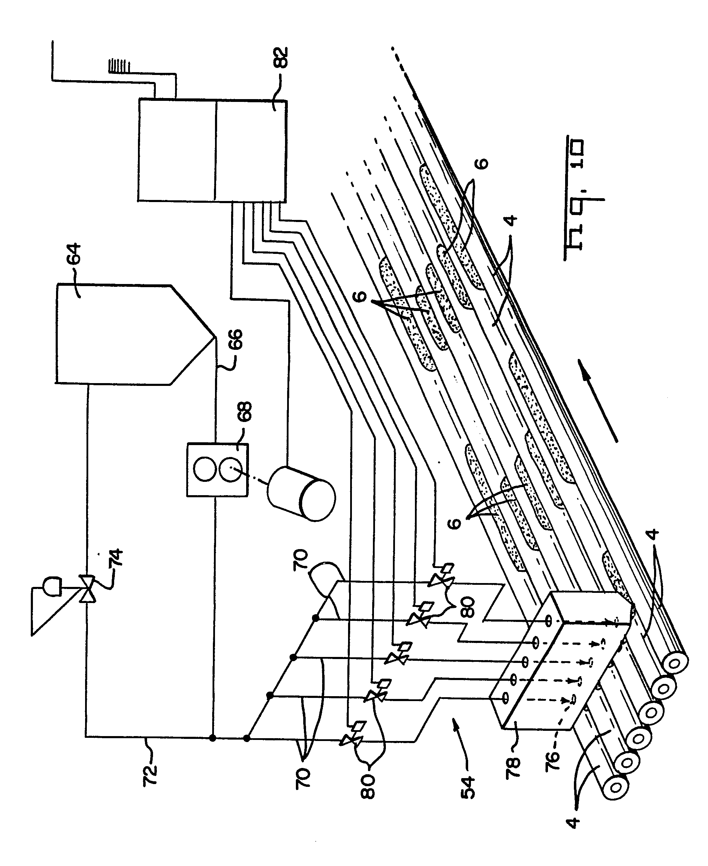

Figure 6 shows an alternative embodiment in which the individual wires of the cable are substantially against each other in the regions of closest proximity 12 so that the beads have a generally triangular cross section as shown at 18. Figure 7 shows a further embodiment in which a distinct band of adhesive 20 extends across the cable 2 and over the surface of adjacent beads. The band 20 of adhesive can be provided on the cable or not, as required by the intended use for the cable. The band 20, for example, may be useful to support the cable on the surface of a panel without permitting the insulation of the individual wires to touch the panel should it be required to avoid contact with the panel.

Figure 4 shows an embodiment in which the cable contains six wires which have the same diameter and two wires of different diameters, the wire 28 having a larger diameter and the wire 30 having a smaller diameter than the remaining wires in the cable. The cable shown in Figure 4 also contains a tubular member 32 which does not have a conducting core and is not an electrical conductor. The tubular member 32 might be a fiber optic conductor or a pneumatic or vacuum line, as required in conjunction with the electrical harness. The member 32 must be of a material to which the adhesive can be bonded.

Figure 5 shows a section of cable 2 in accordance with the invention having connectors 22, 24 installed thereon and being branched as shown at 27. The connector 22 has the same number of terminals therein as there are wires in the cable 2 while the connector 24 has one less terminal therein than there are wires in the cable. The wire at the right-hand end of the cable is, therefore, routed around the endwall of the connector 24 as shown. The end of the cable is branched as shown at 27 with two of the conductors extending in one direction and the remaining conductors being branched off in another direction. The branches each have connectors 25 installed thereon, as shown.

The connectors 22, 24 and 25 can be installed on the cable by simply separating the wires between the rows of beads 6 and connecting the wires to the terminals in the connector with a suitable hand tool. Alternatively, an applicator of the type fully described in Application Serial Number 361,005, filed March 23, 1982, can be used to install the connectors on the cable. The connector applicator shown in that pending application has means for spreading the cable so that the wires will be in alignment with the terminals in the connector being installed on the cable when the assembly operation is carried out. It is advantageous to provide a gap between adjacent wires in the regions 12 to facilitate the use of the applicator. It will be understood that in Figure 5, the connectors 22, 24, 25 have wire receiving slots which form the electrical connections between the terminals in the connectors and the wires when the wires are inserted into the slots.

When the cable is manufactured, the rows of beads 6 of adhesive can be spaced apart by a distance sufficient to permit installation of the connectors on the cable between adjacent rows. Alternatively, the wires can be pulled apart and the beads broken, if necessary, to produce slack wire in the cable at the desired location of installation of the connector. Similarly, when it is required that branches be provided as shown in Figure 5, the adhesive beads can be broken and the branch cables thereby broken out of the main cable 2.

While the beads 6 are provided as rows extending between the side edges of the cable 2 in Figure 1, alternative arrangements can be adopted if desired. For example, the beads between juxtaposed pairs of wires can be spaced along the cable from adjacent beads between adjacent juxtaposed pairs

0097414

of wires.  In other words, the beads might form a sinuous path on the surface of the cable if preferred for any reason.

Referring now to Figures 8-10, the cable is produced by an apparatus 36 from individual reels 34 of insulated wire 4.  The apparatus feeds the wire along a feed path which extends through a wire gathering zone 38, through an adhesive application zone 40, through an adhesive extrusion or pressing zone 42, and to the take-up reel 44.  The take-up reel may be driven so that the wires are fed through the apparatus by the pull of the take-up reel.  Alternatively, separate feed rolls for the wires may be provided at one or more locations along the feed path.

The wire gathering zone has a pair of spaced-apart guide posts 46 which cause the wires to converge and direct them towards spaced-apart guide blades 48.  The wires extend from the guide blades to the surface 52 of a main roller 50. The wires are fed under an adhesive applicator 54 and passed from the applicator between pinch rolls 56 which accurately position the wires relative to each other prior to their passing between the surface of a nip roller 58 and the surface 52 of the main roller.  It will be apparent that the pinch rollers 56 cooperate with the guide blades 48 in guiding the wires into converging parallel relationship thereby forming the cable.

When the wires pass under the adhesive applicator 54, the beads of adhesive are deposited on the upper surface of the cable but because of this viscosity of the adhesive, the adhesive does not penetrate the cable at this time.  When the wires pass between the nip roller 58 and the main roller 50, the individual beads of adhesive are rolled out as the wires are somewhat compressed and the beads are elongated. At the same time, the beads of adhesive may be extruded through the cable and past the region of closest proximity 12 of juxtaposed wires to produce cable as shown in Figure 2.  If, however, the wires are snugly against each other when the cable passes beneath the nip roller 58, cable of the type shown in Figure 6 will be produced.  Cable as shown in Figure 7 will be produced if an excess of adhesive is deposited on the cable and if the rolling operation is properly controlled to prevent rolling out of the adhesive after application.

It is desirable to maintain a thin film of a lubricant such as petrolatum on the surface of the nip roller 58 in order to prevent the adhesive from adhering to the surface of the nip roller. In Figure 8, it is shown that the lubricant can be applied by a doctor roller 60 which rotates against the surface of the nip roller and which is continously supplied with lubricant from a dispensing source 62.

As shown in Figure 10, the adhesive applicator 54 is supplied with adhesive from a reservoir 64 from which a conduit or supply line 66 extends to a pump 68. The pump pumps the adhesive into branch lines 70 which lead to individual orifices 76 in a nozzle 78 on the applicator 54. A bypass line as shown at 72 is provided, in which there is a pressure control valve 74. The pump will thus maintain a constant pressure in the supply lines 70 so that predetermined amounts of adhesive will be deposited on the cable in a given time interval.

Individual solenoid valves 80 are provided on the supply lines 70 and are controlled, as by a controller 82, which may be in the form of a microprocessor. Adhesive will thus be dispensed through the orifices 76 only when the valves 80 are opened upon the command of the microprocessor. It is apparent then that the length of the beads and the spacing between the beads can be accurately controlled by proper programming of the microprocessor. As shown in Figure 10, for example, it may be desirable to provide relatively longer beads on the cable between the wires at the side edge of the cable and the next adjacent wires for the reason that the side edge wires may be subject to more abusive handling than the remaining wires in the cable.

A flat conductor cable in accordance with the present invention has substantially all of the advantages and benefits which can be achieved with presently available types of flat cable and, in addition, can be used economically in the manufacture of many types of harnesses in which previously known types of cable could not be used for economic and
practical reasons.  Cable in accordance with the present
invention is neat in appearance, can be routed against flat
surfaces, as can known types of cable, and the individual
wires in the cable can be readily identified from their
positions in the cable.

The particular advantages which are achieved with cable
in accordance with the present invention stem, in a large
part, from the fact that the cable can be custom made at
the time it is required for a harness and can have the
desired number of conductors.  The conductors need not be all
of the same size and need not be all of the same length along
the cable.  Figure 1, for example, shows a section of cable
in which the three conductors on the left-hand side of the
cable extend beyond the remaining conductors.  A cable section as shown in Figure 1, can be produced without the
necessity of cutting out any of the individual wires and
discarding a portion of the cable.

The individual beads of hot melt adhesive will hold
the wires in the cable when it is handled in a normal
manner during harness manufacture or installation of a harness.  The cable can be twisted or coiled if it is necessary
to pass the cable through a circular opening and after
twisting, it will return to its normal flat shape.  The hot
melt adhesive is capable of undergoing substantial elongation
before it will fracture and any twisting of the cable will
place some of the adhesive in compression and other parts
of the adhesive in tension.  Portions which are compressed
during manipulation of the cable will not fail or fracture
even if other portions of the adhesive in the bead should
be fractured or torn.  It is advantageous to a harness
manufacturer that the beads can be deliberately broken
or caused to fail without damage to the wires in the cable
if it is necessary to form branches as shown at 27 in Figure
5, or to install connectors as also shown in Figure 5 at 22.
By comparison, most presently available ribbon cable cannot
be severed or cut to release individual wires from the cable.
The spaced-apart beads are also advantageous in that if one bead between two juxtaposed wires should be broken, the next adjacent bead will retain the wires in the cable and in order for failure to occur in the next adjacent bead, the threshold stress required to cause failure must be overcome. In other words, since the beads are not continuous, a crack cannot be propagated along the cable.

A wide variety of thermoplastic adhesives are commercially available and the choice of adhesive will depend upon many factors, such as the composition of the insulation and the desired strength in the cable and the cost of the adhesive. For every type of insulation used, there are suitable thermoplastic adhesives which can be used in the manufacture of cable in accordance with the invention. A widely used type of insulation on wires is a filled polyvinyl chloride. Good results were obtained in the practice of the present invention with the use of wires having filled polyvinyl chloride insulation and a simple single component polyamid hot melt having a molecular weight in the range of 300 to 500. A hot melt polyamid adhesive of this type is available, for example, from Henkel Adhesives Company, 4620 West 77th Street, Minneapolis, Minnesota 55435. The particular adhesive used with the polyvinyl chloride insulated wires was Macromelt 6239 and had, upon analysis, a molecular weight as noted above. This material has a softening point in the range of 132° to 145° C and a viscosity of 58 to 85 poises at a temperature of 225° C. Adhesives of this type will undergo a substantial amount of elongation, in the range of about 200 to 900%, prior to failure within a temperature range of -18° C to +24° C.

Flexible adhesives other than hot melt types can be used in the practice of the invention if the adhesive satisfies the functional requirements of the manufacturing process and the performance requirements of the beads of adhesive in the cable. For example, the adhesive must have a viscosity, at the time of application to the cable, such that it will not flow freely but will remain as a globule until the cable passes under the nip roller 58. The adhesive must be capable of being extruded by the nip roller to produce the

0097414

beads as explained above. The adhesive used should have a short "set up time", that is, the adhesive should develop its permanent physical characteristics shortly after it has been extruded by the nip roller. The hot melt thermoplastic discussed above satisfies this requirement in that it is rapidly chilled by the wires and some heat is transferred to the rolls, however, other adhesives also have short set up times.

Cyano-acrylate adhesives could be used in the practice of the invention if the particular composition which is selected satisfies the general requirements discussed above. Quick setting elastomeric adhesives can also be used. Undoubtedly, new adhesives will become available in the future which will be suitable for purposes of the present invention.

It will be apparent from the foregoing that cable in accordance with the invention can take a variety of forms as regards the shapes and lengths of the adhesive beads. If desired, each bead can extend continuously along the length of the cable, however, there is little benefit in the provision of continuous beads rather than spaced-apart beads as shown. The spaced-apart beads will hold the wires in the cable and facilitate installation of connectors on the cable or branch, as previously discussed.

Under some circumstances it may be preferred to have the wires against each other, or almost against each other, as shown in Figure 6, although the profile shown in Figure 2 is preferable in that the cable shown in Figure 2 has beads which extend on each side of the region of closest proximity 12 and ordinarily will withstand more abusive handling than will a cable of the type shown in Figure 6. The spacing between juxtaposed wires, when it is provided as in Figure 2, need not be greater than about 0.13 mm, as noted above, regardless of the size of the wire. A spacing greater than this requires an excessive amount of adhesive and if the spacing is greater than about 0.13 mm, the heat imparted to the cable by the adhesive may cause damage to the insulation of the wires. A minor amount of adhesive, on the other hand, is rapidly chilled as the heat flows into the insulation of the wires and no damage will occur.

It is preferable to select an adhesive which has a cohesive strength and which has a bonding strength that is less than the cohesive strength of the insulation on the wires. In other words, the cohesive strength of the wire insulation should be greater than the cohesive strength of the adhesive and/or greater than the strength of the bond between the adhesive and the surface of the wire insulation. If the adhesive has a cohesive and bonding strength having these limitations, the insulation of the wire will not be damaged when one or more wires are broken out of the cable by pulling the wires from the cable and causing failure of the bead. The failure will then take place either in the adhesive or at the adhesive-surface interface, but will not take place in the insulation of the wire which will remain undamaged.

CLAIMS:

1. A flat multi-conductor cable (2) of the type comprising a plurality of discrete insulated wires (4) in side-by-side parallel relationship and securing means holding the wires in the cable, the cable (2) being characterized in that:

the securing means comprises a flexible adhesive (6) which is provided on the cable (2) between juxtaposed wires (4) at spaced-apart locations, the wires (4) in the cable being free of adhesive in the zones which are between the spaced-apart locations,

the adhesive being provided on one surface (8) of the cable (2) in the form of beads (6) between juxtaposed wires (4) in the cable, each bead extending from the one surface (8) of the cable substantially to the region of closest proximity (12) of the juxtaposed wires (4) and being bonded to the opposed surfaces of the juxtaposed wires, each bead filling the space between the opposed surfaces.

2. A flat multi-conductor cable (2) as set forth in claim 1 characterized in that each bead (6) is an extrusion of adhesive which was produced by depositing adhesive on the one surface (8) of the cable and thereafter applying pressure to the adhesive causing it to flow to at least the region of closest proximity (12) of the juxtaposed wires (4).

3. A flat multi-conductor cable (2) as set forth in claim 2 characterized in that the beads (6) of adhesive are aligned between the side edges of the cable forming spaced-apart rows of beads.

4. A flat multi-conductor cable (2) as set forth in claim 3 characterized in that a layer (20) of the adhesive is provided on each row of beads (6), the layer (20) on each row extending across the cable (2) on the one surface (8) of the cable and between the side edges thereof.

5. A flat multi-conductor cable (2) as set forth in either of claims 1 or 3 characterized in that each bead (6) extends past the region of closest proximity (12) and has a substantially hour-glass shaped cross section.

6. A flat multi-conductor cable (2) as set forth in either of claims 1 or 3 characterized in that the adhesive is a hot melt thermoplastic adhesive.

7. A multi-conductor cable (2) as set forth in claim 5 characterized in that the cable contains at least one elongated polymeric sheath (32) which does not surround a metallic core.

8. A method of making flat multi-conductor cable (2) of the type comprising a plurality of conductors (4) in side-by-side parallel coplanar relationship, insulating material surrounding each of the conductors and insulating material extending between juxtaposed conductors, the method being characterized by the steps of:

feeding a plurality of discrete wires (4), each of which has a coaxially extruded sheath of thermoplastic insulating material in surrounding relationship thereto, along converging feed paths which bring the wires into parallel side-by-side relationship thereby forming a cable (2),

feeding the cable through an adhesive application zone (40) and intermittently depositing beads (6) of adhesive to one surface (8) of the cable (2) and between juxtaposed wires (4),

confining the side edges of the cable between confining means (56) and applying pressure (58) to the beads (6) thereby causing the beads to be extruded into the space (12) between the juxtaposed wires whereby

juxtaposed wires (4) in the cable are joined to each other by a plurality of discrete beads (6) of adhesive which are spaced apart along the length of the cable (2).

9. Apparatus (36) for making multi-conductor cable (2) of the type comprising a plurality of conductors (4) in side-by-side parallel coplanar relationship, insulating material surrounding each of the conductors and insulating material extending between juxtaposed conductors, the apparatus being characterized in that:

the apparatus comprises wire feeding means (34, 44) for feeding a plurality of discrete insulated wires (4) simultaneously along a wire and cable feed path which extends from a plurality of endless sources (34) of the discrete wires through an adhesive application zone (40) thence through and beyond an adhesive extruding zone,

guide means (46, 48) on the path between the sources of discrete wires (34) and the adhesive application zone (40), the guide means being effective to guide the discrete wires (4) into side-by-side parallel coplanar relationship thereby forming a multi-conductor cable (2),

the adhesive application zone (40) having an applicator (54) therein for applying a viscous adhesive to a first surface (8) of the cable (2) between juxtaposed wires (4) in the cable,

the adhesive extruding zone having therein cable confining means (56) engageable with the side edges of the cable (2) being fed therepast the cable compressing means (56, 58) for compressing the cable (2), the cable confining means (56) confining the cable to a predetermined width while the cable passes through the compressing means (56, 58) whereby,

after formation of the cable (2) from the discrete wires (4), the adhesive is applied for the first surface (8) of the cable, and the adhesive is thereafter extruded into the cable and between the opposed surfaces of juxtaposed wires (4), is bonded to the opposed surfaces and thereby maintains the discrete wires in the cable.

10. Apparatus for making multi-conductor cable (2) as set forth in claim 9 characterized in that the applicator (54) in the adhesive applying zone (40) has a plurality of

9717
0097414

individual outlets (76) for adhesive, each outlet being proximate to the cable at a location between a pair of juxtaposed wires (4) in the cable (2) whereby the adhesive is applied as individual beads (6), each bead being deposited on a first surface (8) of the cable between a pair of juxtaposed wires (4).

Fig. 1

Fig. 2

Fig. 3

Fig. 4

Fig. 6

Fig. 7

Fig. 7

0097414

0097414

Fig. 6

Fig. 7

Fig. 10

64

74

72

68

66

82

70

70

80

54

80

6

6

6

4

78

76

6

4

4

00974141

| | DOCUMENTS CONSIDERED TO BE RELEVANT | | EP 83301901.1 |

| Category | Citation of document with indication, where appropriate, of relevant passages | Relevant to claim | CLASSIFICATION OF THE APPLICATION (Int. Cl. ³) |
|---|---|---|---|
| | GB - A - 2 029 629 (LUCAS) | | H 01 B 7/08 |
| X | * Page 1, lines 78-92; page 5, lines 25-30 * | 1-5 | H 01 B 13/00 |
| Y | * Page 1, lines 78-92; page 5, lines 25-30 * | 6-10 | |
| | -- | | |
| Y | FR - A - 2 446 532 (LYON) | 6 | |
| | * Page 2, lines 17-25 * | | |
| | -- | | |
| Y | GB - A - 1 417 209 (LABINAL) | 7 | |
| | * Page 2, lines 27-37 * | | |
| | -- | | |
| Y | US - A - 3 420 208 (GUTHRIE) | 8-10 | |
| | * Column 1, lines 30-52; claims 1,8 * | | TECHNICAL FIELDS SEARCHED (Int Cl ³) |
| | -- | | |
| Y | US - A - 4 157 149 (MOEN) | 8-10 | H 01 B |
| | * Column 1, lines 18-30; column 2, lines 31-58; column 6, lines 1-43 * | | B 05 C 5/00 |
| | -- | | |
| X | DE - U1 - 7 024 588 (DIEHL) | 1 | |
| | * Claim 2; page 3, lines 1-16; fig. 1,2 * | | |
| | -- | | |
| A | GB - A - 1 342 716 | 1 | |
| | * Fig. 4; page 1, lines 88-94 * | | |
| | ---- | | |

The present search report has been drawn up for all claims

| Place of search | Date of completion of the search | Examiner |
|---|---|---|
| VIENNA | 11-07-1983 | KUTZELNIGG |